# FASCICULE DE BREVET EUROPEEN

(11) **EP 2 200 204 B1**
(45) Date de publication et mention de la délivrance du brevet: **16.11.2011**
(21) Numéro de dépôt: 09178281.3
(22) Date de dépôt: 08.12.2009
(51) Int. Cl.: H04J 14/02, H04Q 11/00

(54) **Signalisation pour établir une connexion dans un réseau optique**
Signalisierung zur Herstellung einer Verbindung in einem optischen Netzwerk
Signilisation for establishing a connection in an optical network

(30) Priorité: 19.12.2008 FR 0858857
(43) Date de publication de la demande: 23.06.2010
(73) Titulaire: Alcatel Lucent, 75008 Paris (FR)
(72) Inventeur: Peloso, Pierre, 91620, Nozay (FR); Ronot, M. Benoit, 91620, Nozay (FR)
(74) Mandataire: Keseris, Denis

(56) Documents cités:
- US-A1- 2008 031 623
- NICOLA SAMBO ET AL: "Distributing Shared Regenerator Information in GMPLS-Controlled Translucent Networks" IEEE COMMUNICATIONS LETTERS, IEEE SERVICE CENTER, PISCATAWAY, NJ, US, vol. 12, no. 6, 1 juin 2008 (2008-06-01), pages 462-464, XP011216222 ISSN: 1089-7798
- CUGINI F ET AL: "GMPLS extensions to encompass shared regenerators in transparent optical networks" 33RD EUROPEAN CONFERENCE AND EXHIBITION ON OPTICAL COMMUNICATION - ECOC 2007, SEPTEMBER 16 - 20, 2007, BERLIN, GERMANY, VDE VERLAG, DE, 16 septembre 2007 (2007-09-16), page 2pp, XP009121257 ISBN: 978-3-8007-3042-1
- SAMBO N ET AL: "Path restoration schemes in GMPLS-controlled translucent networks" PHOTONICS IN SWITCHING, 2008. PS 2008. INTERNATIONAL CONFERENCE ON, IEEE, PISCATAWAY, NJ, USA, 4 août 2008 (2008-08-04), pages 1-2, XP031443961 ISBN: 978-1-4244-4326-0

## Description

L'invention se rapporte au domaine des réseaux de communication opaques utilisant le multiplexage en longueurs d'onde (WDM) et capables d'établir des connexions transparentes ou photoniques, notamment aux réseaux à plan de contrôle GMPLS.

Dans un réseau optique, réaliser la transmission d'un signal optique de manière transparente au niveau d'un noeud de commutation, c'est-à-dire sons conversion du signal de données vers le domaine électronique, permet de réduire l'utilisation des transpondeurs optiques et la consommation d'énergie, Il y a donc un avantage économique à réaliser des connexions transparentes lorsque cela est possible. Pour cela, il est nécessaire de disposer d'une méthode d'allocation de longueur d'onde qui permette de trouver un canal de longueur d'onde disponible sur le chemin de la connexion. Pat ailleurs, des dégradations physiques des signaux optiques au cours de la propagation imposent des limites de portée des connexions transparentes et rendent nécessaire d'effectuer une régénération du signal optique pour qu'une connexion puisse atteindre une destination située au-delà de ces limites de portée.

Dans le contexte des réseaux à plan de contrôle distribué de type Generalized Multi Protocol Label Switching (GMPLS), par exemple dans le document GMPLS Architectural Considerations for (Hybrid) Photonic Networks, Internet Engineering Task Force, CCAMP Working Group, Martin Vigoureux et al., Juin 2002, on connaît des méthodes d'allocation de longueur d'onde distribuées fondées sur l'échange de messages de signalisation. Dans une de ces méthodes, un noeud situé sur le chemin de la connexion (Label Switched Path, LSP) forme une offre d'allocation de longueur d'onde qui identifie le ou les canaux de longueur d'onde que le noeud propose d'allouer à la connexion compte tenu de sa connaissance locale des canaux disponibles Cette offre d'allocation est transmise sous la forme d'un objet LABEL SET au noeud voisin aval, lequel la restreint èventuellement en fonction de sa connaissance locale des canaux disponibles avant de la passer au noeud voisin aval. Cette méthode permet au noeud d'extrémité aval de la connexion d'obtenir fille offre d'allocation d'un ou plusieurs canaux disponibles parmi lesquels ce noeud sélectionne le ou les canaux à allouer.

Les documents cités au rapport de recherche divulguent des versions du protocole de signalisation RSVP ou RSVP-TE dans lesquelles un message de signalisation comporte l'identification des noeuds aptes à ou selectionnés pour régénérer le signal optique.

Un but de l'invention est de proposer des méthodes pour établir des connexions dans un réseau optique en tenant compte de la disponibilité des canaux de longueur d'onde et des dégradations physiques.

Selon un mode de réalisation, l'invention fournit un procédé de signalisation pour établir une connexion le long d'un chemin, dit chemin de la connecxion, dans un réseau optique, comprenant l'étape consistant à recevoir au niveau d'un noeud capable de conversion-régénération un message de signalisation comportant, d'une part, un premier ensemble d'identifiants de canaux de longueur d'onde représentant au moins un canal de longueur d'onde susceptible d'être alloué à ladite connexion entre ledit noeud capable de conversion-régénération et un noeud voisin amont et, d'autre part, des instructions de régénération associées à au moins un noeud du chemin de la connexion et destinées à provoquer la régénération d'un signal optique de la connexion par ledit ou chaque noeud auxquelles sont associées les instructions de régénération.

Selon d'autres modes de réalisation avantageux, ce procédé peut présenter une ou plusieurs des caractéristiques additionnelles suivantes.

Selon un mode de réalisation particulier, le procédé comporte en outre les étapes consistant à,
détecter un besoin d'effectuer une conversion-régénération dudit signal optique de la connexion au niveau du noeud capable de conversion-régénération en fonction d'un état de disponibilité dudit au moins un canal de longueur d'onde sur une portion aval du chemin de la connexion,
en réponse à ladite détection, déterminer s'il existe un besoin d'effectuer une régénération dudit signal optique de la connexion au niveau d'au moins un noeud situé en aval sur le chemin de la connexion en fonction d'une dégradation physique estimée dudit signal optique,
en fonction du besoin déterminé, modifier des instructions de régénération associées audit ou moins un noeud situé en aval, et
transmettre à un noeud voisin aval un message de signalisation comportant, d'une part, un deuxième ensemble d'identifiants de canaux de longueur d'onde représentant au moins un canal de longueur d'onde susceptible d'être alloué a ladite connexion entre ledit noeud capable de conversion-régénération et ledit noeud voisin aval et, d'autre part, lesdites instructions de régénération modifiées.

Selon un mode de réalisation particulier, l'étape de modification comporte la suppression d'une instruction de régénération associée à un noeud situé en aval pour lequel ledit besoin est déterminé ne pas exister et/ou l'adjonction d'une instruction de régénération associée à un noeud situé en aval pour lequel ledit besoin est déterminé exister.

Selon un mode de réalisation particulier, le procédé comporte en outre l'étape consistant à accéder à une base de données comportant des paramètres physiques des liens du réseau pour estimer ladite dégradation physique du signal optique au niveau dudit au moins un noeud situé en aval.

Selon un mode de réalisation particulier, le procédé comporte en outre l'étape consistant à collecter lesdits paramètres physiques des liens au moyen d'un protocole de routage à état des liens.

Selon un mode de réalisation particulier, ledit message de signalisation reçu comporte un descripteur de chemin comprenant des identifiants d'une séquence de noeuds situés sur le chemin de la connexion.

Avantageusement, lesdites instructions de régénération sont incluses dans ledit descripteur de chemin. Une telle représentation des instructions de régénération facilite la sémantique d'association entre les instructions et les noeuds. Toutefois de nombreuses autres possibilités existent quant à la représentation des instructions de régénération.

Selon un mode de réalisation particulier, le procédé comporte en outre les étapes consistant à accéder à une base de données de topologie du réseau pour déterminer une séquence de noeuds modifiée entre ledit noeud capable de conversion-régénération et un noeud de destination de la connexion et à transmettre un descripteur de chemin modifié de manière correspondante dans le message de signalisation transmis audit noeud voisin aval.

Selon un mode de réalisation préféré, la connexion est un chemin à commutation d'étiquette d'un réseau GMPLS. Selon un mode de réalisation particulier, les messages de signalisation sont conformes au protocole RSVP-TE. Selon un mode de réalisation particulier, les ensembles d'identifiants de canaux de longueur d'onde consistent en des objets LABEL SET ou UPSTREAM LABEL SET dudit protocole.

Selon un autre mode de réalisation, l'invention fournit également un programme d'ordinateur comportant des codes d'instruction aptes à être lus ou écrits sur un support et aptes à être exécutés par un ordinateur pour effectuer toutes les étapes du procédé précité.

Selon un autre mode de réalisation, l'invention fournit également un dispositif de commande pour un noeud de commutation optique capable de conversion-régénération, ledit dispositif de commande comportant des moyens pour effectuer toutes les étapes du procédé précité.

L'invention fournit également un procédé de signalisation pour établir une connexion le long d'un chemin dans un réseau optique, comprenant les étapes consistant à :
recevoir au niveau d'un noeud capable de conversion-régénération un message de signalisation comportant, d'une part, un premier ensemble d'identifiants de canaux de longueur d'onde représentant au moins un canal de longueur d'onde susceptible d'être alloué à ladite connexion entre ledit noeud capable de conversion-régénération et un noeud voisin amont et, d'autre part, des instructions de régénération associées à au moins un noeud du chemin de la connexion et destinées à provoquer la régénération d'un signal optique de la connexion par ledit ou chaque noeud associé,
détecter des instructions de régénération associées audit noeud capable de conversion-régénération,
en réponse à ladite détection, déterminer au moins un canal de longueur d'onde susceptible d'être produit par des moyens de conversion-régénération dudit noeud et disponible pour être alloué à ladite connexion entre ledit noeud capable de conversion-régénération et ledit noeud voisin aval,
produire un deuxième ensemble d'identifiants de canaux de longueur d'onde, ledit deuxième ensemble d'identifiants de canaux de longueur d'onde représentant ledit au moins un canal de longueur d'onde déterminé à l'étape précédente, et transmettre audit noeud voisin aval un message de signalisation comportant ledit deuxième ensemble d'identifiants de canaux de longueur d'onde et lesdites instructions de régénération reçues.

De préférence, ledit deuxième ensemble d'identifiants de canaux de longueur d'onde représente au moins un canal de longueur d'onde différent dudit au moins un canal de longueur d'onde représenté par le premier ensemble d'identifiants.

Selon un autre mode de réalisation, l'invention fournit également un programme d'ordinateur comportant des codes d'instruction aptes à être lus ou écrits sur un support et aptes à être exécutés par un ordinateur pour effectuer toutes les étapes du procédé précité.

Selon un autre mode de réalisation, l'invention fournit également un dispositif de commande pour un noeud de commutation optique capable de conversion-régénération, ledit dispositif de commande comportant des moyens pour effectuer toutes les étapes du procédé précité.

Les termes « amont » et « aval » font référence au sens de transmission des messages de signalisation et sont indépendants de toute référence au sens des signaux optiques devant être transportés par la connexion, qui peut être unidirectionnelle ou bidirectionnelle.

L'invention part du constat qu'il existe de nombreuses architectures de noeuds de commutation optiques dans lesquelles la conversion de longueur d'onde d'un signal optique est effectuée par l'intermédiaire d'une conversion optique/électronique/optique (O/E/O), à savoir en démodulant le signal reçu à une première longueur d'onde puis en modulant un signal optique à une seconde longueur d'onde avec les données ainsi obtenues. Ainsi, dans une conversion de ce type, le signal optique est complètement régénéré en même temps que sa longueur d'onde porteuse est modifiée. On appelle conversion-régénération ce type d'opération. Réciproquement, il existe de nombreuses architectures de noeuds de commutation optiques dans lesquelles les transpondeurs prévus pour régénérer les signaux optiques sont capables de transmettre un signal régénéré à une longueur d'onde différente du signal reçu, permettant ainsi de réaliser une conversion-régénération sensiblement sans coût supplémentaire par rapport à une simple régénération. Certains aspects de l'invention sont fondés sur l'idée de contrôler l'utilisation des transpondeurs O/E/O le long du chemin d'une connexion de façon à effectuer de manière synergique les opérations de conversion de longueur d'onde requises, par exemple en raison de la contention sur les canaux de longueur d'onde, et les opérations de régénération des signaux requises, par exemple en raison des dégradations physiques.

Une idée à la base de l'invention est de véhiculer dans un même message de signalisation une offre d'allocation de longueur d'onde destinée à permettre aux noeuds de déterminer localement si une commutation transparente est possible ou si une conversion de longueur d'onde est nécessaire, et des instructions de régénération destinées à provoquer la régénération du signal optique de la connexion par certains noeuds. Une telle méthode de signalisation permet aux noeuds de traiter de manière coordonnée l'allocation des longueurs d'onde et les besoins de régénération des signaux d'une manière qui privilégie globalement les commutations transparentes dans le domaine optique.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique fonctionnelle d'un réseau optique hybride dans lequel une connexion peut être établie.
La figure 2 est une représentation schématique fonctionnelle d'un noeud de commutation pouvant être utilisé dans le réseau de la figure 1.
La figure 3 est un diagramme d'étape représentant un procédé d'établissement d'une connexion partiellement transparente pouvant être mis en oeuvre dans le réseau de la figure 1.
La figure 4 est une représentation schématique fonctionnelle d'un mode de réalisation de contrôleur de noeud pouvant être utilisé dans le réseau de la figure 1.
La figure 5 est un diagramme représentant un mode de réalisation d'une étape de signalisation pouvant être utilisé dans le procédé de la figure 3.
La figure 6 est un diagramme d'étape représentant un procédé de traitement de la signalisation pouvant être mis en oeuvre par le contrôleur de noeud de la figure 4.

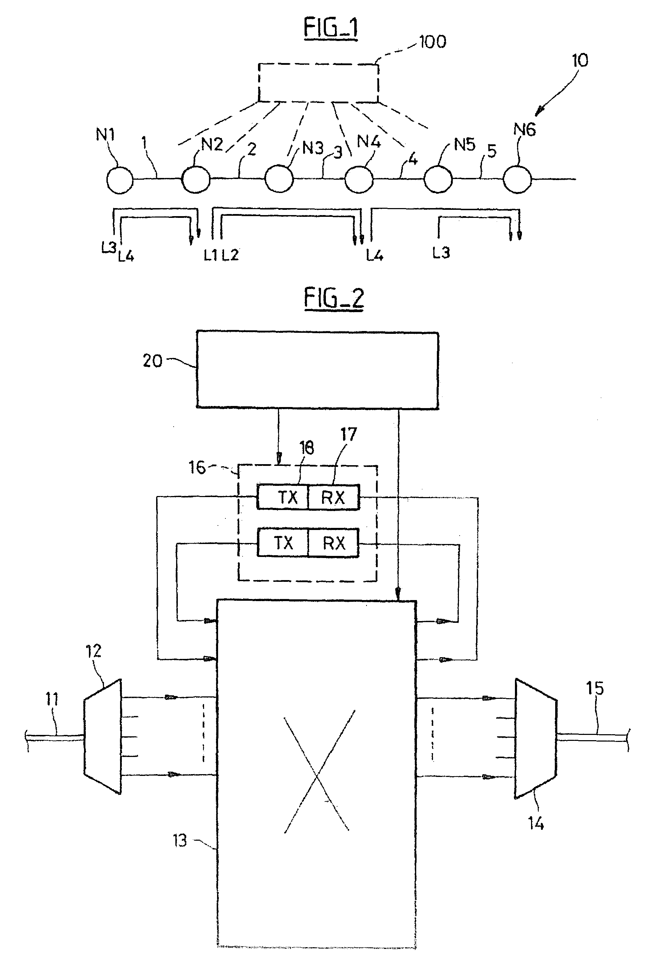

En référence à la figure 1, un réseau optique 10 très schématiquement représenté comporte des noeuds de commutation N1 à N6, par exemple du type multiplexeur optique reconfigurable à insertion-extraction (ROADM) ou autre, reliés par des liens optiques 1 à 5, par exemple des fibres optiques. La topologie du réseau représenté, !e nombre, l'agencement et le degré de connectivité des noeuds sont choisis arbitrairement pour les besoins de l'illustration. Les noeuds du réseau optique 10, ou du moins certains d'entre eux, comportent à la fois des ressources pour commuter les signaux dans le domaine optique i.e. effectuer une commutation transparente, et des ressources pour régénérer les signaux via le domaine électronique (conversion O/E/O). En général, il est souhaitable d'exploiter le réseau de manière à maximiser l'utilisation de la commutation transparente des signaux. En particulier, les transpondeurs O/E/O peuvent être prévus en quantité limitée, pour diminuer le coût d'équipement du réseau, ce qui exclut de régénérer en totalité le trafic transporté à chaque noeud.

Pour contrôler le réseau 10, une pile protocolaire GMPLS est déployée au niveau de chaque noeud. Les noeuds sont donc capables d'établir des connexions sous la forme de chemins à commutation d'étiquette (LSP pour Label-switched path). En particulier, des étiquettes généralisées de type longueur d'onde (LSP Encoding Type = Lambda) sont utilisées pour signaliser des connexions photoniques à la granularité d'un canal de longueur d'onde.

Les noeuds du réseau 10 peuvent être identiques ou différents les uns des autres. La figure 2 est une représentation fonctionnelle d'un exemple d'architecture pouvant être utilisée pour réaliser les noeuds N1 à N6. Entre une fibre optique entrante 11 et une fibre sortante 15, on trouve une couche optique comportant ici un démultiplexeur de longueurs d'onde 12, une matrice de commutation optique 13 et un multiplexeur de longueurs d'onde 14. La matrice de commutation optique 13 permet d'aiguiller un canal de longueur d'onde entrant soit vers la fibre sortante 15 pour effectuer une commutation transparente, soit vers une unité de régénération-conversion 16, pour effectuer une régénération ou une conversion-régénération du signal. L'unité 16 comporte des moyens de réception optique 17 capables de fonctionner à plusieurs longueurs d'onde, de préférence à toutes les longueurs d'onde de la grille employée dans le réseau, et des moyens de transmission optique 18 capables de fonctionner à plusieurs longueurs d'onde, de préférence à toutes les longueurs d'onde de la grille employée dans le réseau. Les moyens de réception 17 peuvent comporter des filtres accordables ou des ensembles de filtres fixes. Les moyens de transmission optique 18 peuvent comporter des sources accordables en longueur d'onde ou des ensembles de sources fixes. Un contrôleur de noeuds 20 commande la matrice de commutation optique 13 et l'unité de régénération-conversion 16 en fonction des ressources allouées aux connexions. Il est bien sûr possible de connecter d'avantage de fibres entrantes et/ou de fibres sortantes à un tel noeud de manière similaire.

En ce qui concerne la couche optique des noeuds N1 à N6, de nombreuses autres possibilités existent qui n'ont pas besoin d'être décrites ici. De nombreux autres types de composants peuvent être employés, par exemple des coupleurs passifs, des bloqueurs de longueurs d'ondes, des commutateurs à sélection de longueur d'onde (wavelength selective switch), etc.

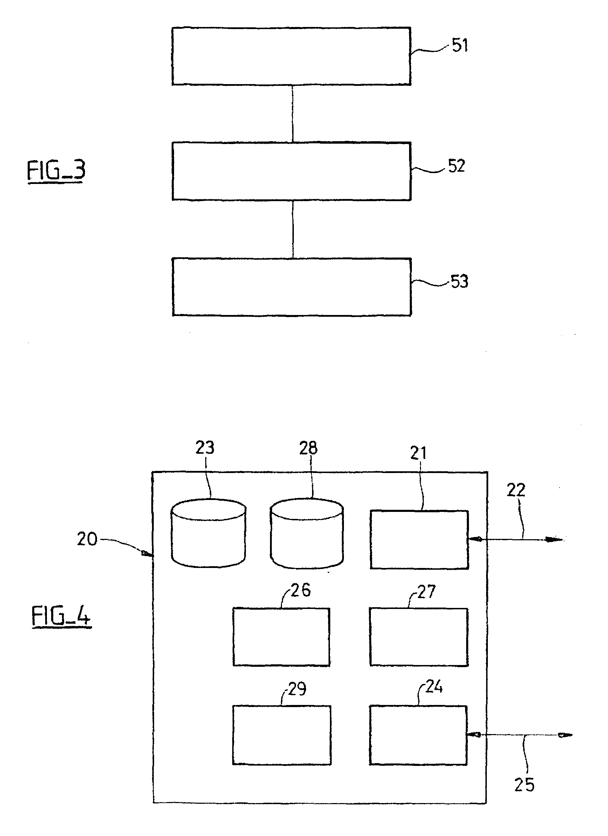

La figure 4 est une représentation fonctionnelle d'un mode de réalisation du contrôleur de noeud 20, utilisable dans les noeuds N1 à N6. Un module de routage 21 met en oeuvre un protocole de routage à état des liens, par exemple OSPF-TE ou IS-IS-TE, et échange des messages de routage 22 avec les autres noeuds conformément à ce protocole, de manière à disséminer des informations de topologie, de connectivité et de capacité des liens du réseau, selon la technique connue. Le contrôleur de noeud 20 comporte une base de données d'ingénierie de trafic 23 alimentée par le module de routage 21 et dans laquelle ces informations sont stockées et mises à jour de manière dynamique.

Le contrôleur de noeud 20 comporte une base de données physiques 28 dans laquelle sont stockés des paramètres physiques locaux des liens et des noeuds du réseau. La base de données physiques 28 est par exemple alimentée par le module de routage 21 pour mettre à jour ces informations de manière dynamique, par exemple à partir des mesures effectuées par des dispositifs intégrés dans les noeuds. En variante, la base de données physiques 28 peut être alimentée à partir d'un système de gestion du réseau, non représenté. Différentes sortes de données physiques peuvent être prévues dans la base de données 28, de façon à permettre un calcul prédictif de la dégradation des signaux optiques le long d'un chemin transparent donné dans le réseau. Par exemple, des paramètres utilisables dans ce but sont la dispersion chromatique cumulée par lien, la dégradation d'OSNR par lien, la phase non-linéaire cumulée par lien, la PMD du lien, etc. Il est aussi possible de stocker des paramètres plus descriptifs du lien tels que les caractéristiques de chaque section d'amplification avec leurs contributions en bruit et leurs atténuations. Ces paramètres étant pour partie dépendants de la longueur d'onde, les valeurs relatives au pire cas peuvent être retenues, ou des valeurs moyennes, ou des tableaux de valeurs propres à chaque longueur d'onde. Bien qu'on ait représenté la base de données 28 de manière unitaire par mesure de simplicité, il est possible de structurer ces données de différentes manières, notamment sous la forme de plusieurs structures de données interconnectées.

Un module de signalisation 24 met en oeuvre un protocole de signalisation, par exemple RSVP-TE, et échange des messages de signalisation 25 avec les autres noeuds conformément à ce protocole, de manière à gérer les connexions traversant le noeud, notamment les opérations d'établissement, de modification ou de suppression d'une connexion. La base de données d'ingénierie de trafic 23 est mise à jour en fonction des connexions établies à travers le noeud, sous le contrôle d'un module de contrôle d'admission 26, de manière à enregistrer de manière dynamique l'état d'occupation des interfaces optiques du noeud et des ressources de conversion-régénération.

Il existe plusieurs possibilités pour réaliser le transport des messages de contrôle, notamment les messages de routage 22 et messages de signalisation 25 dans le réseau 10. Par exemple, ces messages peuvent être transportés sur les mêmes liens que le trafic de données (« in-fiber ») ou sur des liens dédiés distincts, sur les mêmes canaux (« in-band ») ou sur des canaux dédiés distincts.

Ainsi, en fonction des informations obtenues à travers le module de signalisation 24 et du module de routage 21, la base de données d'ingénierie de trafic 23 maintient en permanence des informations détaillées sur l'état des liens adjacents au noeud, i.e. les liens connectés à ses interfaces optiques entrantes et sortantes. Ces informations détaillées comportent notamment l'état de disponibilité de chaque canal de longueur d'onde sur ces liens. En ce qui concerne les liens non adjacents, la base de données d'ingénierie de trafic 23 maintient des informations d'état moins détaillées car le protocole de routage dissémine des informations agrégées afin de limiter le volume des échanges. Ces informations agrégées comportent par exemple la bande passante disponible sur ces liens, mais non l'état de disponibilité de chaque canal de longueur d'onde. Bien qu'on ait représenté la base de données 23 de manière unitaire par mesure de simplicité, il est possible de structurer ces données de différentes manières, notamment sous la forme de plusieurs structures de données interconnectées.

La notion de disponibilité d'un canal de longueur d'onde peut être appliquée de manière absolue ou de manière relative. Dans un mode de réalisation, des niveaux de priorité sont alloués aux connexions et sont utilisés pour permettre ou interdire la réaffectation des ressources, par ex. des canaux de longueur d'onde, d'une connexion à une autre. Dans ce cas, un canal de longueur d'onde occupé par une connexion est considéré disponible pour l'établissement d'une connexion de priorité supérieure mais indisponible pour l'établissement d'une connexion de priorité inférieure ou égale.

Le contrôleur de noeud 20 compte aussi un module de gestion des étiquettes 27 et un module de calcul de chemin 29 dont le fonctionnement sera décrit plus bas.

Pour procéder à l'établissement d'un nouveau LSP de type Lambda entre un noeud d'extrémité amont et un noeud d'extrémité aval donnés, par exemple un LSP ayant un débit égal au débit d'un canal de longueur d'onde entre le noeud N1 et le noeud N6, il existe essentiellement trois problématiques à résoudre : la détermination d'un chemin spatial, autrement dit la détermination des noeuds et des liens qui vont être utilisés, l'allocation des longueurs d'onde, autrement dit la détermination du ou des canaux qui vont être utilisés sur ces liens, et la prise en compte des dégradations physiques du signal optique, autrement dit la détermination des éventuelles opérations de régénération nécessaires en certains points du chemin pour obtenir un signal de la qualité souhaitée au niveau de la destination.

Dans un mode de réalisation d'un procédé d'établissement d'une connexion représenté sur la figure 3, une étape de détermination du chemin spatial 51 et une étape de prise en compte des dégradations physiques 52 sont effectuées au moins partiellement avant une étape de signalisation 53 servant notamment à effectuer l'allocation des longueurs d'onde. Cette manière de procéder est notamment avantageuse dans les cas où l'on effectue la détermination du chemin spatial et la prise en compte des dégradations physiques à partir d'informations relativement centralisées et l'allocation des longueurs d'onde à partir d'informations distribuées dans les noeuds.

L'étape 51 consiste à déterminer un descripteur de chemin comportant une séquence d'adresses de noeuds ou de groupes de noeuds devant être traversés pour atteindre la destination. Cette séquence peut être déterminée strictement ou partiellement. Une séquence partiellement déterminée comporte au moins un saut flottant (loose hop) Dans un mode de réalisation adapté à l'utilisation d'une signalisation par le protocole RSVP-TE, la séquence d'adresse est représentée sous la forme d'un objet Explicit Route Object (ERO), tel que décrit dans les RFC 3209 et 3477 de l'IETF. En variante, d'autres formats peuvent être utilisés pour représenter le descnpteur de chemin.

L'étape 52 consiste à déterminer le ou les noeud(s) de la séquence au niveau desquels une régénération du signal optique est nécessaire et, le cas échéant, à produire des instructions de régénération associées à ce ou ces noeud(s). Dans un mode de réalisation adapté à l'utilisation d'une signalisation par le protocole RSVP-TE, les instructions de régénération associées à un noeud sont représentées sous la forme d'un attribut d'un sous-objet représentant le noeud en question dans l'objet ERO précité. Cet attribut peut être par exemple codé sur un ou plusieurs bits du sous-objet, par exemple dans un champ Interface ID.

Dans un mode de réalisation, les étapes 51 et 52 sont effectuées par un contrôleur du noeud d'extrémité amont de la connexion réalisé conformément à la figure 4. En particulier, le module de calcul de chemin 29 effectue les étapes 51 et 52 en exploitant les données de topologie et de physique stockées dans les bases 23 et 28.

Puis le module de signalisation 24 débute l'étape de signalisation 53 en émettant une requête de connexion comportant un descripteur du chemin de connexion déterminé, les instructions de régénération associées, le cas échéant, et une offre d'allocation de longueurs d'onde. La phase de signalisation ainsi déclenchée sert notamment à identifier un canal de longueur d'onde qui puisse être utilisé tout le long du chemin de la nouvelle connexion ou des canaux de longueur d'onde pouvant être utilisés sur des segments successifs dudit chemin en effectuant une ou plusieurs opérations de conversion-régénération. Pour déterminer ce ou ces canaux, les noeuds mettent en oeuvre un procédé distribué qui va maintenant être décrit.

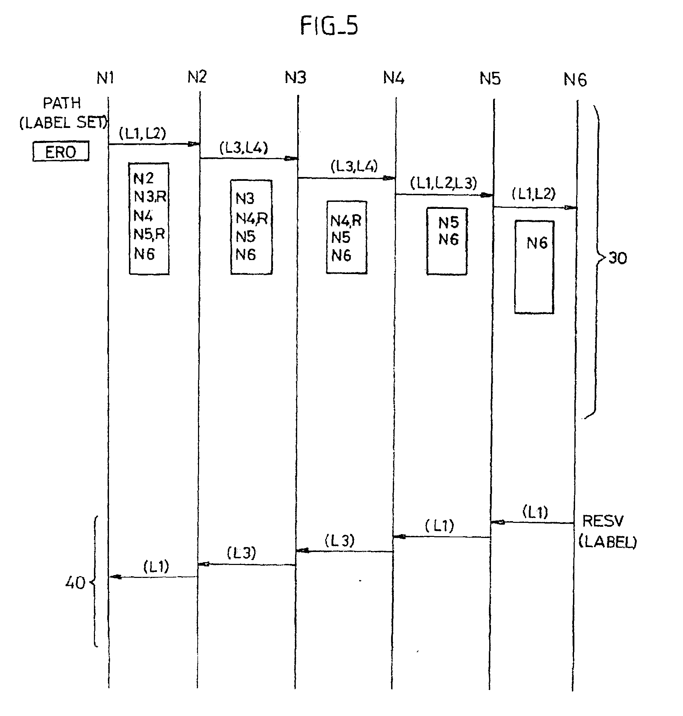

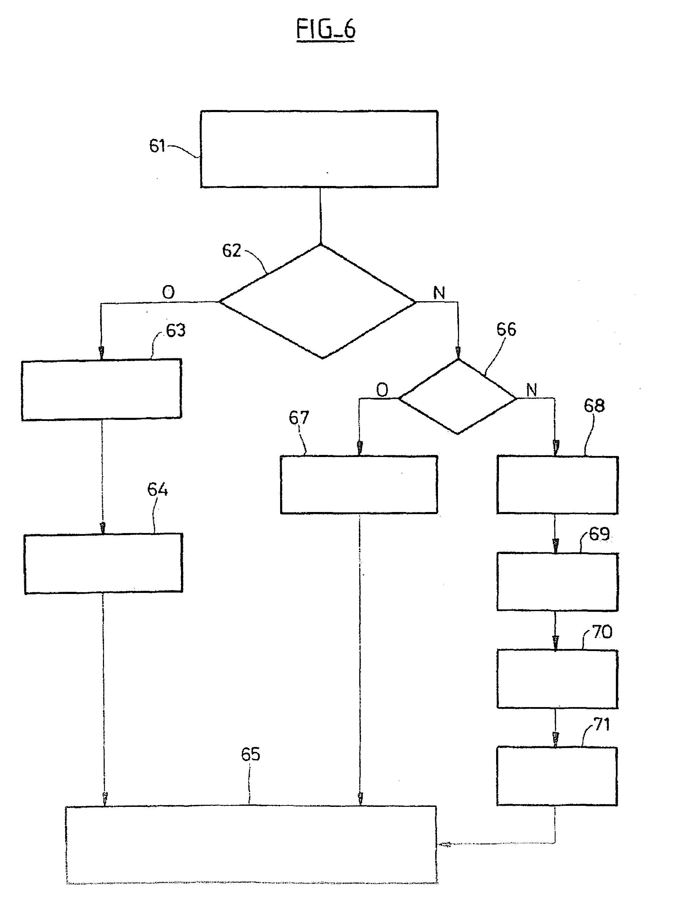

Dans un mode de réalisation illustré par les figures 5 et 6, le procédé de signalisation repose sur le protocole RSVP-TE et l'allocation de longueur d'onde sur l'emploi de l'objet LABEL SET conformément aux principes décrits dans la RFC 3471 de l'IETF. Le noeud d'extrémité amont de la connexion à établir, à savoir ici N1, génère une requête de connexion sous la forme d'un message PATH contenant, en autres objets, des instructions de régénération spécifiant le ou les noeuds du chemin de la connexion devant effectuer une régénération du signal optique et un objet LABEL SET contenant une liste d'identifiants de canaux qui désigne le ou les canaux de longueur d'onde pouvant être utilisés pour le prochain saut vers l'aval. Les instructions de régénération sont ici codées dans un objet ERO spécifiant strictement ou partiellement le chemin de la connexion à établir. Sur la figure 5, l'objet LABEL SET est représenté par des parenthèses et l'objet ERO par un cadre rectangulaire.

Dans une première phase de signalisation 30, ce message PATH est transmis de noeud en noeud vers le noeud d'extrémité aval, à savoir ici N6, Au cours de cette transmission, le contenu du message PATH peut être modifié par chaque noeud successif. En particulier, l'objet LABEL SET est traité par le module de gestion des étiquettes 27 de manière à produire, à partir du LABEL SET reçu depuis le noeud voisin amont, un LABEL SET actualisé destiné à être transmis au noeud voisin aval. Lorsque le noeud d'extrémité aval reçoit le message PATH, il sélectionne un canal parmi ceux identifiés dans le LABEL SET et le copie dans un objet LABEL, représenté également par des parenthèses, qu'il retransmet vers l'amont dans un message RESV. Dans une deuxième phase de signalisation 40, le message RESV est transmis de noeud en noeud vers le noeud d'extrémité amont pour procéder, saut par saut, à l'allocation des longueurs d'onde. Au cours de cette transmission, chaque noeud successif peut modifier l'objet LABEL en se restreignant aux canaux proposés dans le LABEL SET qu'il a reçu.

En référence à la figure 6, on décrit maintenant un mode de réalisation d'un procédé de traitement du message de signalisation PATH convenant pour des noeuds du chemin de connexion qui sont munis de moyens de conversion-régénération. Ce procédé est mis en oeuvre par les contrôleurs des noeuds correspondants.

A l'étape 61, le message PATH comportant notamment les objets ERO et LABEL SET est reçu depuis le noeud voisin amont et séquencé.

A l'étape 62, la présence d'une instruction de régénération associée au noeud dans lequel le procédé se déroule est recherchée. Si une telle instruction est présente, le procédé passe à l'étape 63, sinon à l'étape 66.

A l'étape 66, une condition de continuité de longueur d'onde est évaluée. Pour cela, le contenu du LABEL SET qui a été reçu depuis le noeud voisin amont est lu pour identifier les canaux de longueur d'onde désignés dans ce LABEL SET, puis la base de données 23 est consultée pour déterminer quels canaux, parmi les canaux désignés dans le LABEL SET reçu, sont disponibles sur le lien adjacent aval c'est-à-dire disponibles pour porter la nouvelle connexion en direction du noeud voisin aval en respectant la condition de continuité. S'il en existe, le procédé passe à l'étape 67 dans laquelle un nouveau LABEL SET désignant tous ou certains de ces canaux disponibles est généré pour être transmis au noeud voisin aval.

A l'étape 66, s'il s'avère qu'aucun des canaux désignés dans le LABEL SET reçu n'est disponible sur le ou les liens adjacents aval, le besoin est détecté d'effectuer une conversion-régénération de longueur d'onde à partir d'un ou plusieurs des canaux désignés dans le LABEL SET reçu. A l'étape 68, la base de données 23 est consultée pour déterminer le ou les canaux de longueur d'onde accessibles via cette conversion et disponibles pour porter la nouvelle connexion en direction du noeud voisin aval. Le procédé passe alors à l'étape 69 dans laquelle un nouveau LABEL SET désignant tous ou certains de ces canaux est généré pour être transmis au noeud voisin aval. Accessible via conversion signifie que le noeud dispose des capacités matérielles pour effectuer la conversion de longueur d'onde correspondante depuis au moins un des canaux désignés dans le LABEL SET reçu.

En conséquence de la décision d'effectuer une conversion-régénération du signal au niveau du noeud, des étapes 70 et 71 sont aussi effectuées. L'étape 70 consiste à estimer des dégradations physiques du signal optique le long de la portion du chemin de connexion située en aval du noeud et à déterminer en conséquence si une ou plusieurs régénérations du signal optique sont nécessaires au niveau d'un ou plusieurs noeuds aval et, le cas échéant, par quels noeuds ces régénérations doivent être effectuées. Cette étape peut être effectuée à l'aide des paramètres physiques stockés dans la base de données physiques 28, similairement à l'étape 52 précitée. L'étape 71 consiste à mettre à jour les instructions de régénération reçues depuis le noeud voisin amont pour les mettre en conformité avec les déterminations de l'étape 70. En conséquence, des instructions de régénération peuvent être supprimées et/ou ajoutées et un objet ERO modifié est ainsi généré.

A l'étape 63, la décision est prise, en application de l'instruction détectée, d'effectuer une conversion-régénération de longueur d'onde à partir d'un ou plusieurs des canaux désignés dans le LABEL SET reçu. La base de données 23 est consultée pour déterminer le ou les canaux de longueur d'onde accessibles via cette conversion et disponibles pour porter la nouvelle connexion en direction du noeud voisin aval. Le procédé passe alors à l'étape 64 dans laquelle un nouveau LABEL SET désignant tous ou certains de ces canaux est généré pour être transmis au noeud voisin aval.

Enfin, à l'étape 65, le message PATH est transmis au noeud voisin aval avec le nouvel objet LABEL SET et l'objet ERO éventuellement modifié, pour être traité de manière similaire par le noeud aval.

Le procédé de la figure 6 n'est pas décrit de manière exhaustive. En particulier, des cas de blocage dans lesquels il ne serait pas possible de proposer une offre d'allocation de longueur d'onde au noeud voisin aval, par exemple en raison de l'occupation des ressources, ne sont pas traités ici. L'homme du métier trouvera dans la littérature des solutions pour détecter et remédier à de tels cas. Des adaptations correspondantes du procédé de la figure 6 peuvent être conçues.

Dans un mode de réalisation, ce procédé est mis en oeuvre par des noeuds conformes à la figure 4. Les étapes 61, 62 et 65 sont effectuées par le module de signalisation 24. Les étapes 63, 64 et 66 à 69 sont effectuées par le module de gestion des étiquettes 27. Les étapes 70 et 71 sont effectuées par le module de calcul de chemin 29.

En variante, un dispositif de calcul centralisé 100, représenté schématiquement à la figure 1, peut être prévu pour effectuer au moins certaines des étapes 51, 52, 70 et 71 à la place des contrôleurs des noeuds. Le dispositif 100 est à chaque fois interrogé par un noeud ayant besoin de l'information correspondant à l'une de ces étapes et transmet une réponse à ce noeud. Dans un mode de réalisation, le dispositif de calcul centralisé 100 est un élément PCE apte à communiquer avec les noeuds par un protocole PCEP, comme décrit dans la RFC 4655 de l'IETF et d'autres documents du groupe de travail PCE.

### Exemple

En référence aux figures 1 et 5, on va maintenant décrire un exemple d'établissement de connexion effectué en utilisant le procédé de la figure 6 Les hypothèses sont les suivantes :
Sur la figure 1, on considère le réseau dans un état donné, dans lequel du trafic est déjà transporté sur les liens 1 à 5. Pour simplifier les explications, le réseau 10 est supposé fonctionner avec une grille de 4 canaux L1 à L4. Dans cet exemple, comme représenté par les flèches, un canal L1 et un canal L2 sont occupés sur les liens 2 et 3; un canal L3 est occupé sur les liens 1 et 5 et un canal L4 est occupé sur les liens 1, 4 et 5. Tous les noeuds N2 à N5 ont la capacité matérielle d'effectuer des conversions-régénérations de toutes les longueurs d'onde vers toutes les longueurs d'onde. Sur le plan des dégradations physiques, le réseau permet d'effectuer au maximum deux sauts de manière transparente.

L'objet LABEL SET et l'objet ERO sont traités par les noeuds de la manière suivante :
Initialement, l'offre d'allocation de longueurs d'onde comporte tous les canaux disponibles sur l'interface sortante du noeud N1, à savoir L1 et L2. Des instructions de régénération, qui sont représentées sur la figure 5 par la lettre R juxtaposée aux noms des noeuds, sont initialement associées aux noeuds situés tous les deux sauts à partir du noeud N1, c'est-à-dire les noeuds N3 et N5.

Le noeud N2 détermine le besoin d'effectuer une conversion-régénération à l'étape 66. A l'étape 69, les canaux L3 et L4 sont proposés dans le nouveau LABEL SET. A l'étape 70, le besoin d'effectuer une régénération du signal est déterminé exister au niveau des noeuds situés tous les deux sauts à partir du noeud N2, c'est-à-dire en fait uniquement au niveau du noeud N4 puisque le noeud N6 est à l'extrémité de la connexion. A l'étape 71, les instructions de régénération associées aux noeuds N3 et N5 sont supprimées et une instruction de régénération associée au noeud N4 est ajoutée.

Le noeud N3 passe par l'étape 67 qui ne modifie ni l'offre d'allocation reçue ni les instructions de régénération.

Le noeud N4 passe par l'étape 63 dans laquelle il détermine que les canaux L1, L2 et L3 sont disponibles en aval pour produire le signal optique régénéré. Il transmet donc le LABEL SET enrichi des canaux L1 et L2.

Le noeud N5 passe par l'étape 67 qui élimine le canal L3 de l'offre d'allocation.

Le noeud N6 peut donc allouer à la connexion sur le lien amont l'un des deux canaux L1 et L2 désignés dans le LABEL SET reçu. On suppose que L1 est sélectionné. Le noeud N6 envoie donc le message RESV avec un objet LABEL désignant ce canal. Le noeud N5 fait de même et se configure pour effectuer une commutation transparente du canal L1.

Le noeud N4 peut allouer à la connexion sur le lien amont l'un des deux canaux L3 et L4 désignés dans le LABEL SET reçu. On suppose que L3 est sélectionné. Le noeud N4 se configure donc pour effectuer une conversion-régénération du canal entrant L3 vers le canal sortant L1 et envoie le message RESV avec un objet LABEL désignant le canal L3. Le noeud N5 se configure pour effectuer une commutation transparente du canal L3 et transmet aussi le message RESV avec un objet LABEL désignant le canal L3.

Enfin, le noeud N2 peut allouer à la connexion sur le lien amont l'un des deux canaux L1 et L2 désignés dans le LABEL SET reçu. On suppose que L1 est sélectionné. Le noeud N2 se configure donc pour effectuer une conversion-régénération du canal entrant L1 vers le canal sortant L3 et envoie le message RESV avec un objet LABEL désignant le canal L1.

Dans cet exemple, l'allocation des longueurs d'onde est finalement réalisée au moyen d'un seul échange de messages entre les deux extrémités de la connexion et avec seulement deux conversions-régénérations, ce qui est un optimum compte tenu des hypothèses faites sur les dégradations physiques. Si l'on court-circuitait les étapes 70 et 71 au niveau du noeud N2, il est aisé de concevoir que l'on aboutirait en revanche à un total de trois conversions-régénérations, à savoir en N2, puis aux deux points initialement prévus N3 et N5.

De même, si le procédé court-circuitait l'étape 62 et passait par l'étape 66 au niveau du noeud N4, il est aisé de concevoir que l'on aboutirait en revanche à réaliser une conversion-régénération supplémentaire au niveau du noeud N5 en raison de l'indisponibilité du canal L3 sur le lien 5, soit un total de trois conversions-régénérations en N2, N4 et N5.

De nombreuses variantes de réalisation du procédé de la figure 6 peuvent être conçues. Dans certaines variantes de réalisation, les étapes 62 à 64 peuvent être prévues sans les étapes 70 et 71. Dans certaines variantes de réalisation, les étapes 66 à 71 peuvent être prévues sans les étapes 62 à 64.

Dans une variante de réalisation du procédé de la figure 6, l'étape 70 comporte le calcul d'un chemin spatial modifié entre le noeud courant et le noeud d'extrémité aval et la détermination des dégradations physiques le long de ce chemin modifié. Ainsi, à l'étape 71, l'objet ERO est modifié pour refléter la nouvelle séquence de noeuds ainsi calculée entre le noeud courant et le noeud d'extrémité aval et, le cas échéant, les instructions de regénération associées à ces noeud.

Sur la figure 5, les noeuds traitent l'objet ERO pour ne retransmettre à chaque fois que les informations relatives à la portion aval du chemin de la connexion, ce qui permet de limiter le volume des messages de signalisation. Toutefois cette restriction n'est pas obligatoire. Dans une variante de réalisation, chaque noeud retransmet le message de signalisation avec aussi les instructions de régénération reflétant les régénérations effectuées sur la portion amont du chemin de la connexion et au niveau dudit noeud, ce qui permet notamment au noeud d'extrémité aval de connaître tous les points de régénération de la connexion.

Le terme conversion de longueur d'onde ou simplement conversion désigne la modification de la longueur d'onde porteuse utilisée pour porter un signal de données. Pour la conversion-régénération, les étapes suivantes peuvent être suivies : réception du signal optique entrant, démodulation électronique du signal de données transporté, et utilisation du signal de données pour moduler un signal optique à une longueur d'onde différente. Dans un mode de réalisation particulier, une partie des données démodulées, par exemple correspondant à des données de contrôle, peut être modifiée au cours de l'opération de conversion-régénération.

Dans le cas d'utilisation de l'objet LABEL SET, le sens de transmission de l'offre d'allocation correspond au sens de transmission des données dans la connexion. Toutefois cela n'est pas obligatoire. Par exemple, le procédé de la figure 4 peut être adapté pour traiter un objet UPSTREAM LABEL SET, qui correspond à une offre d'allocation pour la direction montante d'un LSP bidirectionnel.

Les modes de réalisation décrits ci-dessus concernent des méthodes d'allocation de longueur d'onde distribuées mises en oeuvre dans un réseau supportant une pile protocolaire GMPLS. Toutefois, des méthodes analogues peuvent être mises en oeuvre avec d'autres piles protocolaires. Indépendamment des procédés et protocoles utilisés pour transporter les informations de contrôle dans le réseau, des méthodes d'allocation de longueur d'onde dans lesquelles une offre d'allocation circule de noeud en noeud en étant mise à jour en fonction des informations disponibles localement sont notamment utilisables dans tout réseau optique où l'information détaillée quant à l'état d'occupation de chaque lien, notamment l'identité des canaux libres, n'est disponible qu'à un niveau local.

Certains des éléments représentés, notamment les contrôleurs de noeuds et les modules qui en font partie peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé de signalisation pour établir une connexion le long d'un chemin, dit chemin de la connexion, dans un réseau optique (10), **caractérisé par** l'étape consistant à :
recevoir (61) au niveau d'un noeud capable de conversion-régénération un message de signalisation comportant, d'une part, un premier ensemble d'idenfifiants de canaux de longueur d'onde représentant au moins un canal de longueur d'onde susceptible d'être alloué à ladite connexion entre ledit noeud capable de conversion-régénération et un noeud voisin amont et, d'autre part, des instructions de régénération associées à au moins un noeud du chemin de la connexion et destinées à provoquer la régénération d'un signal optique de la connexion par ledit ou chaque noeud auxquelles sont associées les instructions de régénération.

2. Procedé selon la revendication 1, **caractérisé par** les étapes consistant à :
détecter (66) un besoin d'effectuer une conversion-régénération dudit signal optique de la connexion au niveau du noeud capable de conversion-régénération en fonction d'un état de disponibilité dudit au moins un canal de longueur d'onde sur une portion aval du chemin de la connexion,
en réponse à ladite détection, déterminer (70) s'il existe un besoin d'effectuer une régénération dudit signal optique de la connexion au niveau d'au moins un noeud situé en aval sur le chemin de la connexion en fonction d'une dégradation physique estimée dudit signal optique,
en fonction du besoin déterminé, modifier (71) des instructions de régénération associées audit au moins un noeud situé en aval,
transmettre (65) à un noeud voisin aval un message de signalisation comportant,
d'une part, un deuxième ensemble d'identifiants de canaux de longueur d'onde représentant au moins un canal de longueur d'onde susceptible d'être alloué à ladite connexion entre ledit noeud capable de conversion-régénération et ledit noeud voisin aval et, d'autre part, lesdites instructions de régénération modifiées.

3. Procédé selon la revendication 2, **caractérisé par le fait que** l'étape de modification (71) comporte la suppression d'une instruction de régénération associée à un noeud situé en aval pour lequel ledit besoin est déterminé ne pas exister.

4. Procédé selon la revendication 2 ou 3, **caractérisé par le fait que** l'étape de modification (71) comporte l'adjonction d'une instruction de régénération assolée à un noeud situé en aval pour lequel ledit besoin est déterminé exister.

5. Procédé selon l'une des revendications 2 à 4, **caractérisé par** l'étape consistant à accéder à une base de données comportant des paramètres physiques des liens du réseau (28) pour estimer ladite dégradation physique du signal optique au niveau dudit au moins un noeud situé en aval.

6. Procédé selon la revendication 5, **caractérisé par** l'étape consistant à collecter lesdits paramètres physiques des liens au moyen d'un protocole de routage à état des liens (21).

7. Procédé selon l'une des revendications 1 à 6, **caractérisé par le fait que** ledit message de signalisation reçu comporte un descripteur de chemin comprenant des identifiants d'une séquence de noeuds situés sur le chemin de la connexion

8. Procédé selon la revendication 7 **caractérisé par le fait que** lesdites instructions de régénération sont incluses dans ledit descripteur de chemin.

9. Procédé selon la revendication 7 ou 8, **caractérisé par** les étapes consistant à accéder à une base de données de topologie du réseau (23) pour déterminer (71) une séquence de noeuds modifiée entre ledit noeud capable de conversion-régénération et un noeud de destination de la connexion et à transmettre un descripteur de chemin modifié de manière correspondante dans le message de signalisation transmis audit noeud voisin aval.

10. Procédé selon la revendication 1, **caractérisé par** les étapes consistant à :
détecter (62) des instructions de régénération associées audit noeud capable de conversion-régénération,
en réponse à ladite détection, déterminer (63) au moins un canal de longueur d'onde susceptible d'être produit par des moyens de conversion-régénération dudit noeud et disponible pour être alloué à ladite connexion entre ledit noeud capable de conversion-régénération et un noeud voisin aval,
produire (64) un deuxième ensemble d'identifiants de canaux de longueur d'onde,
ledit deuxième ensemble d'identifiants de canaux de longueur d'onde représentant ledit au moins un canal de longueur d'onde déterminé à l'étape précédente, et
transmettre (65) audit noeud voisin aval un message de signalisation comportant ledit deuxième ensemble d'identifiants de canaux de longueur d'onde et lesdites instructions de régénération reçues.

11. Procédé selon la revendication 10, **caractérisé par le fait que** ledit deuxième ensemble d'identifiants de canaux de longueur d'onde représente au moins un canal de longueur d'onde différent dudit au moins un canal de longueur d'onde représenté par le premier ensemble d'identifiants.

12. Procédé selon l'une des revendications 1 à 11, **caractérisé par le fait que** la connexion est un chemin à commutation d'étiquette d'un réseau GMPLS, les messages de signalisation étant conformes au protocole RSVP-TE, lesdits ensembles d'identifiants de canaux de longueur d'onde consistant en des objets LABEL SET ou UPSTREAM LABEL SET dudit protocole.

13. Programme d'ordinateur comportant des codes d'instruction aptes à être lus ou écrits sur un support et aptes à être exécutés par un ordinateur pour effectuer toutes les étapes du procédé selon l'une des revendications 1 à 12.

14. Dispositif de commande (20) pour un noeud de commutation optique capable de conversion-régénération, ledit dispositif de commande comportant des moyens pour effectuer toutes les étapes du procédé selon l'une des revendications 1 à 12.

## Claims

1. A signaling method for establishing a connection along a path, known as a connection path, within an optical network (10), **characterized by** the step consisting of:
deceiving (61), within a node capable of converting-regenerating a signaling message composing, firstly, a first set of wavelength channel identifiers representing at least one wavelength channel that may be allocated to said connection between said node capable of conversion-regeneration and an upstream neighboring node, and secondly, regeneration instructions associated with at least one node of the connection path and intended to cause the regeneration of an optical signal of the connection by said or each node with which the regeneration instructions are associated.

2. A method according to claim 1, **characterized by** the steps consisting of detecting (66) a need to perform a conversion-regeneration of said optical signal of the connection within the node capable of conversion-regeneration as a function of an availability state of said at least one wavelength channel on a downstream portion of the connection path,
in response to said detection, determining (70) whether there exists a need to perform a regeneration of said optical signal of the connection within at least one node located downstream on the connection path as a function of an estimated physical degradation of said optical signal,
as a function of the determined need, editing (71) the regeneration instructions associated with said at least one node located downstream,
transmitting (65) to a downstream neighboring node a signaling message composing, firstly, a second set of wavelength channel identifiers representing at least one wavelength channel that may be allocated to said connection between said node capable of converting-regenerating and said upstream neighboring node, and secondly, said edited regeneration instructions.

3. A method according to claim 2, **characterized by** the fact that the step of editing (71) comprises the deletion of a regeneration instruction associated with a node located downstream, for which said need is determined to not exist.

4. A method according to claim 2 or 3, **characterized by** the fact that the step of editing (71) comprises the addition of a regeneration instruction associated with a node located downstream, for which said need is determined to exist.

5. A method according to one of the claims 2 to 4, **characterized by** the fact that the step consisting of accessing a database composing physical parameters of links of the network (28) in order to estimate said physical degradation of the optical signal within said at least one node located downstream.

6. A method according to claim 5, **characterized by** the step consisting of collecting said physical parameters of links by means of a link-state routing protocol (21).

7. A method according to one of the claims 1 to 6, **characterized by** the fact that said received signaling message comprises a path descriptor comprising identifiers of a sequence of nodes located on the connection path.

8. A method according to claim 7, **characterized by** the fact that said regeneration instructions are included within said path descriptor.

9. A method according to claim 7 or 8, **characterized by** the steps consisting of accessing a network topology database (23) to determine (71) a sequence of nodes edited between said node capable of conversion/generation and a destination node of the connection, and to transmit a path descriptor edited in a corresponding manner within the signaling message transmitted to said downstream neighboring node.

10. A method according to claim 1, **characterized by** the steps consisting of detecting (62) regeneration instructions associated with said node capable of conversion-regeneration,
in response to said detection, determining (63) at least one wavelength channel that can be produced by said node's means of converting/regenerating and is available to be allocated to said connection between said node capable of conversion/generation and a downstream neighboring node.
producing (64) a second set of wavelength channel identifiers, said second set of wavelength channel identifiers representing said at least one wavelength channel determined during the preceding step, and transmitting (65) to said downstream neighboring node a signaling message comprising said second set of wavelength channel identifiers and said received regeneration instructions.

11. A method according to claim 10, **characterized by** the fact that said second set of wavelength channel identifiers represent at least one different wavelength channel of said at least one wavelength channel represented by the first set of identifiers.

12. A method according to one of the claims 1 to 11, **characterized by** the fact that the connection is a label-switched path of a GMPLS network, the signaling messages being compliant with the RSVP-TE protocol, said wavelength channel identifiers consisting of LABEL SET or UPSTREAM LABEL SET objects of said protocol.

13. A computer program comprising instruction codes capable of being read or written on a medium and capable of being executed by a computer in order to carry out all the steps of the method according to one of the claims 1 to 12.

14. A control device (20) for an optical switching node capable of conversion-regeneration, said control device composing means for performing all the steps of the method according to one of the claims 1 to 12.

## Patentansprüche

1. Signalisierungsverfahren fur den Aufbau einer Verbindung entlang eines Pfads, dem sogenannten Verbindungspfad, in einem optischen Netzwerk (10), **gekennzeichnet durch** den folgenden Schritt:
Empfangen (61), an einem Knoten, welcher geeignet ist, eine Signalisierungsnachricht zu konvertieren-regenerieren, einer Signalisierungsnachricht, die seinerseits einen ersten Satz von Wellenlangenkanalkennungen, welche mindestens einen Wellenlangenkanal darstellen, der der besagten Verbindung zwischen dem besagten fur die Konversion-Regeneration geeigneten Knoten und einem benachbarten Netzaufwarts-Knoten zugewiesen werden kann, und andererseits mit mindestens einem Knoten des Verbindungspfads assoziierte Befehle, die fur das Auslosen der Regeneration eines optischen Signals der Verbindung **durch** den besagten oder jeden Knoten, mit welchem die Regenerationsbefehle assoziiert sind, bestimmt sind, enthält.

2. Verfahren nach Anspruch 1, **gekennzeichnet durch** die folgenden Schritte:
Erkennen (66) einer Notwendigkeit fur das Ausfuhren einer Konversion-Regeneration des besagten optischen Signals der Verbindungen an dem fur die Konversion-Regeneration geeigneten Knoten in Abhängigkeit von einem Verfugbarkeitszustands des besagten einen Wellenlangenkanals auf einem Netzabwarts-Abschnitt des Verbindungspfads,
in Reaktion auf das besagte Erkennen, Ermitteln (70), ob eine Notwendigkeit besteht, eine Regeneration des besagten optischen Signals der Verbindung an mindestens einem Netzabwarts-Knoten auf dem Verbindungspfad in Abhängigkeit von einer geschätzten physikalischen Verschlechterung des besagten optischen Signals auszufuhren,
in Abhängigkeit von der ermittelten Notwendigkeit, Andern (71) der mit dem mindestens einen Netzabwarts-Knoten assoziierten Regenerationsbefehle,
Übertragen (65), an einen benachbarten Netzabwarts-Knoten, einer Signalisierungsnachricht, welche seinerseits einen zweiten Satz von Wellenlangenkanalkennungen, die mindestens einen Wellenlangenkanal, der geeignet ist, der besagten Verbindung zwischen dem besagten fur die Konversion-Regeneration geeigneten Kanal und dem besagten benachbarten Netzabwarts-Knoten zugewiesen zu werden, darstellen, und andererseits die besagten geänderten Regenerationsbefehle enthält.

3. Verfahren nach Anspruch 2, **dadurch gekennzeichnet, dass** der Schritt des Anderns (71) das Unterdrucken eines mit einem Netzabwarts-Knoten, fur welchen ermittelt wurde, dass die besagte Notwendigkeit nacht besteht, assoziierten Regenerationsbefehls umfasst.

4. Verfahren nach Anspruch 2 oder 3, **dadurch gekennzeichnet, dass** der Schritt des Anderns (71) das Hinzufügen eines mit einem Netzabwarts-Knoten, fur welchen ermittelt wurde, dass die besagte Notwendigkeit besteht, assoziierten Regenerationsbefehls umfasst.

5. Verfahren nach einem der Anspruche 2 bis 4, **gekennzeichnet durch** den Schritt des Zugriffs auf eine Datenbasis, welche physische Parameter der Netzwerkabschnitte (28) enthält, um die besagte physikalische Verschlechterung des optischen Signals an dem besagten mindestens einen Netzwabwarts-Knoten zu schätzen.

6. Verfahren nach Anspruch 5, **gekennzeichnet durch** den Schritt des Erfassens der besagten physikalischen Parameter der Netzwerkabschnitte anhand eines Routing-Protokolls gemäß dem Zustand der Abschnitte (21).

7. Verfahren nach einem der Anspruche 1 bis 6, **dadurch gekennzeichnet, dass** die besagte empfangene Signalisierungsnachricht einen Pfadbeschreiber mit Kennungen einer Folge von auf dem Verbindungspfad angeordneten Knoten enthält.

8. Verfahren nach Anspruch 7, **dadurch gekennzeichnet, dass** die besagten Regenerationsbefehle in dem besagten Pfadbeschreiber enthalten sind.

9. Verfahren nach Anspruch 7 oder 8, **gekennzeichnet durch** die Schritte des Zugriffs auf eine Netzwerktopologie-Datenbasis (23), um eine Folge von geänderten Knoten zwischen dem besagten fur die Konversion-Regeneration geeigneten Knoten und einem Zielknoten der Verbindung zu ermitteln (71), und des Ubertragens eines gemäß der an den besagten benachbarten Netzabwarts-Knoten ubertragenen Signalisierungsnachricht geänderten Pfadbeschreibers.

10. Verfahren nach Anspruch 1, **gekennzeichnet durch** die folgenden Schritte Erkennen (62) von mit dem besagten fur die Konversion-Regeneration geeigneten Knoten assoziierten Regenerationsbefehlen,
in Reaktion auf das besagte Erkennen, Ermitteln (63) mindestens eines Wellenlangenkanals, welcher von den Mitteln fur die Konversion-Regeneration erzeugt werden kann und fur das Zuweisen an die besagte Verbindung zwischen dem besagten fur die Konversion-Regeneration geeigneten Knoten und einem Netzabwarts-Knoten verfugbar ist,
Erzeugen (64) eines zweiten Satzes von Wellenlangenkanalkennungen, wobei der besagte zweite Satz von Wellenlängenkanlkennungen den besagten mindestens einen in dem vorherigen Schritt ermittelten Wellenlängenkanal darstellt, und Übertragen (65) einer Signalisierungsnachricht, welche den besagten zweiten Satz von Wellenlangenkanalkennungen und die besagten empfangenen Regenerationsbefehle enthält, an den besagten benachbarten Netzabwarts-Knoten.

11. Verfahren nach Anspruch 10, **dadurch gekennzeichnet, dass** der besagte zweite Satz von Wellenlangenkanalkennungen mindestens einen anderen Wellenlangenkanal als der besagte mindestens eine von dem ersten Satz von Kennungen dargestellte Wellenlängenkanal darstellt.

12. Verfahren nach einem der Anspruche 1 bis 11, **dadurch gekennzeichnet, dass** die Verbindung ein Label-Switching-Pfad eines GMPLS-Netzwerks ist und die Signalisierungsnachrichten dem RSVP-TE-Protokoll entsprechen, wobei die besagten Satze von Wellenlangenkanalkennungen aus den Objekten LABEL SET oder UPSTREAM LABEL SET des besagten Protokolls bestehen.

13. Computerprogramm mit Befehlscodes, welche auf einem Speicherträger gelesen oder geschrieben und von einem Computer ausgeführt werden können, um alle Schritte des Verfahrens gemäß einem der Anspruche 1 bis 12 durchzuführen.

14. Steuervornchtung (20) fur einen optischen Vermittlungsknoten fur einen optischen Schaltknoten, welcher fur die Konversion-Regeneration geeignet ist, wobei die besagte Steuervornchtung Mittel fur die Ausführung aller Schritte des Verfahrens gemäß einem der Anspruche 1 bis 12 umfasst.
